# EUROPEAN PATENT APPLICATION

(11) **EP 4 715 759 A1**
(43) Date of publication of application: **25.03.2026**
(21) Application number: 25203025.9
(22) Date of filing: 18.09.2025
(51) Int. Cl.: G06V 10/82

(54) **ANSWER GENERATION PROGRAM, ANSWER GENERATION METHOD, AND INFORMATION PROCESSING APPARATUS**

(30) Priority: 20.09.2024 JP 2024164433
(71) Applicant: FUJITSU LIMITED, Kawasaki-shi, Kanagawa 211-8588 (JP)
(72) Inventor: YAMAO, Sosuke, Kawasaki-shi, Kanagawa, 211-8588 (JP); SAITO, Junya, Kawasaki-shi, Kanagawa, 211-8588 (JP); HIRONAKA, Shingo, Kawasaki-shi, Kanagawa, 211-8588 (JP); ENDO, Arisu, Kawasaki-shi, Kanagawa, 211-8588 (JP); KUROSAWA, Natsuki, Kawasaki-shi, Kanagawa, 211-8588 (JP); KIKUCHI, Takashi, Kawasaki-shi, Kanagawa, 211-8588 (JP); HARAZONO, Yuki, Kawasaki-shi, Kanagawa, 211-8588 (JP); INOUE, Issei, Kawasaki-shi, Kanagawa, 211-8588 (JP); PELAT, Guillaume, Kawasaki-shi, Kanagawa, 211-8588 (JP)
(74) Representative: Hoffmann Eitle

(57) **Abstract**

An answer generation program causes a computer to execute a process including acquiring a question input to a first agent that generates information based on input information, the question being related to a video for monitoring a specific task, identifying a specific agent that has a function of either video recognition for the specific task or domain knowledge of the specific task, from among a plurality of second agents capable of cooperating with the first agent, based on the acquired question, and causing the first agent to output, as an answer to the question, an answer result based on generation information that is generated by the identified specific agent in accordance with an instruction from the first agent.

## Description

### FIELD

The embodiments discussed herein are related to an answer generation program, an answer generation method, and an information processing apparatus.

### BACKGROUND

In recent years, AI chatbot services that provide answers to users' questions using artificial intelligence (AI) have been increasing. For example, dialogue systems have been disclosed in which an AI agent uses a large language model to answer questions from users.

Patent Literature 1: Japanese Patent No. 7509972

However, in the conventional technology as described above, it has been observed that the agent, in the process of generating an answer to a question related to a specific task using a large language model, generates content that deviates from factual information or produces output that appears plausible despite being unrelated to the context. For this reason, it is impossible to suppress hallucination in results generated by the agent.

Accordingly, it is an object in one aspect of an embodiment of the invention to provide an answer generation program, an answer generation method, and an information processing apparatus capable of suppressing hallucination in results generated by an agent.

### SUMMARY

According to an aspect of an embodiment, an answer generation program causes a computer to execute a process including acquiring a question input to a first agent that generates information based on input information, the question being related to a video for monitoring a specific task, identifying a specific agent that has a function of either video recognition for the specific task or domain knowledge of the specific task, from among a plurality of second agents capable of cooperating with the first agent, based on the acquired question, and causing the first agent to output, as an answer to the question, an answer result based on generation information that is generated by the identified specific agent in accordance with an instruction from the first agent.

### BRIEF DESCRIPTION OF DRAWINGS

FIG. 1 is a diagram illustrated to describe an information processing apparatus according to a first embodiment;
FIG. 2 is a functional block diagram illustrating the functional configuration of the information processing apparatus according to the first embodiment;
FIG. 3 is a flowchart illustrated to describe the processing performed by a parent agent;
FIG. 4 is a diagram illustrated to describe an example of a prompt given to a parent agent;
FIG. 5 is a diagram illustrated to describe graph analysis processing;
FIG. 6 is a diagram illustrating an example of the data structure of a detection pattern and a matching pattern;
FIG. 7 is a diagram illustrating an example of a knowledge graph;
FIG. 8 is a diagram illustrating an example of an action scene graph;
FIG. 9 is a diagram illustrated to describe image analysis processing;
FIG. 10 is a diagram illustrated to describe a situation of a specific example;
FIG. 11 is a diagram illustrated to describe an exemplary screen of a specific example (first step);
FIG. 12 is a diagram illustrated to describe an exemplary screen of a specific example (second step);
FIG. 13 is a diagram illustrated to describe an exemplary screen of a specific example (third step);
FIG. 14 is a diagram illustrated to describe another example of processing performed by a child agent; and
FIG. 15 is a diagram illustrated to describe an exemplary hardware configuration.

### DESCRIPTION OF EMBODIMENTS

Preferred embodiments will be explained with reference to accompanying drawings. Moreover, the embodiments disclosed herein are not intended to be limiting of the invention. The embodiments can be combined as appropriate, provided that no inconsistencies arise.

### (a) First Embodiment

### Description of Information Processing Apparatus

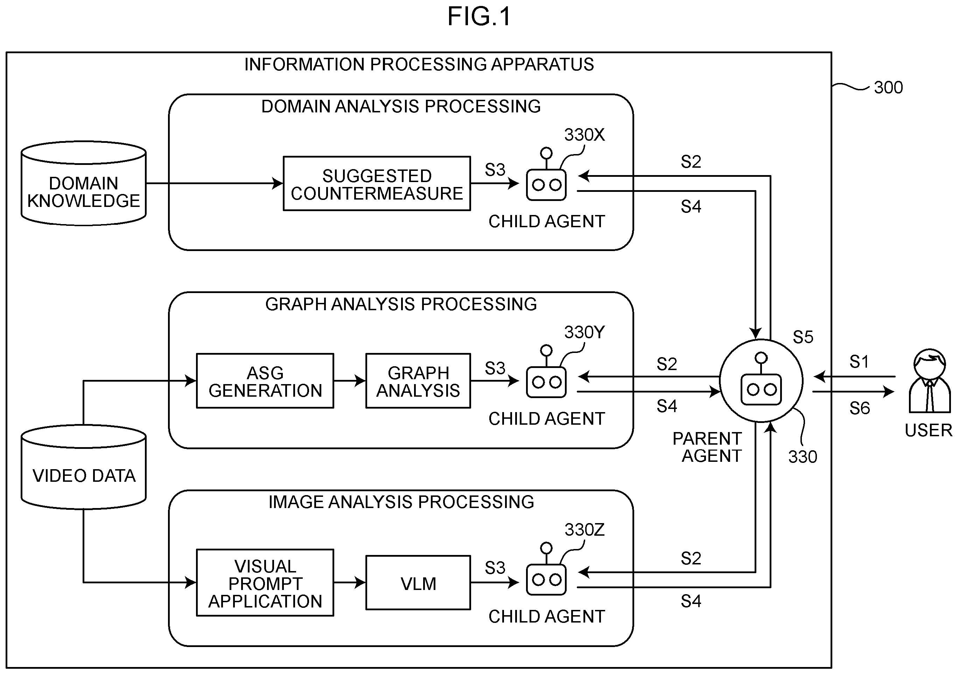

FIG. 1 is a diagram illustrated to describe an information processing apparatus 300 according to a first embodiment. The information processing apparatus 300 illustrated in FIG. 1 is one example of a computer apparatus that executes an AI agent (hereinafter simply referred to as agent) and generates and outputs an answer to a question from a user in cooperation with each agent. The present embodiment is described, by way of example, in the context of examining countermeasures to reduce the risk of accidents in warehouse operations in which forklifts and workers operate in a mixed environment.

Moreover, an agent refers to a software program that collects data, executes self-determined tasks using the collected data, and achieves a predetermined objective. For example, an agent autonomously operates and generates an answer using a trained machine training model or a large language model. The agent autonomously selects and executes an optimal action that is suitable to achieve the objective configured by an administrator or the like.

As illustrated in FIG. 1, the information processing apparatus 300 executes a parent agent 330, which is an example of a first agent, and a plurality of child agents (child agent 330X, child agent 330Y, and child agent 330Z), which are examples of a second agent.

The parent agent 330 requests each child agent to perform processing, aggregates the generation information that is produced by the child agents, generates an answer to be output to a user. For example, the parent agent 330 inputs the generation information acquired from the child agents into a large language model (LLM), generates an answer, and outputs it to the user.

The child agent 330X performs domain analysis to examine countermeasures using knowledge of occupational health and safety and user journeys on the basis of information input from the parent agent 330. For example, the child agent 330X outputs generation information representing appropriate countermeasures on the basis of business knowledge and a video analysis result, in response to the information input from the parent agent 330.

The child agent 330Y performs graph analysis that includes detecting an event represented in abstract textual expressions from video data and conducting illustrative and statistical analysis on the basis of information input from the parent agent 330. For example, the child agent 330Y executes action scene graph (ASG) generation to generate an action scene graph from video data (hereinafter sometimes simply referred to as video) and generates the ASG in advance. Then, the child agent 330Y performs graph analysis using the ASG to detect the information (event) that is input from the parent agent 330, and outputs an analysis result to the parent agent 330 as generation information.

The child agent 330Z is trained with important information to be stored with respect to the information input from the parent agent 330 and performs image analysis processing for appropriately recognizing the context (on-site characteristics) by using an autoencoder that compresses visual features. For example, the child agent 330Z applies a visual prompt to the video data and generates a video with a visual prompt in advance. Then, the child agent 330Z uses a vision-language model (VLM) to analyze the on-site context suitable for the answer on the basis of the visual prompt-embedded video data, and outputs the analysis result to the parent agent 330 as generation information.

In such a system configuration, the information processing apparatus 300 acquires a question for the parent agent 330, where the question relates to an object in a video footage that monitors a specific task. Then, the information processing apparatus 300 identifies a specific agent, among the plurality of child agents capable of cooperating with the parent agent, that has a function related to either video recognition or domain knowledge of the specific task on the basis of the question.
Thereafter, the information processing apparatus 300 causes the parent agent 330 to output, as an answer to the question, an answer result based on the generation information that is generated by a specific agent in accordance with instructions from the parent agent 330.

For example, the information processing apparatus 300 causes the parent agent 330 to acquire a user question regarding consideration of safety countermeasures for warehouse operations or the like (S1). Subsequently, the information processing apparatus 300 causes the parent agent 330 to determine the processing suitable for obtaining an answer to the question and to request analysis processing from the corresponding child agent (S2).

Then, the information processing apparatus 300 causes the child agent, to which the analysis processing is requested, to execute the processing (S3), and causes a result obtained by the processing (generation information) to be output to the parent agent 330 (S4). Thereafter, the information processing apparatus 300 causes the parent agent 330 to aggregate the processing result from the respective child agents (S5), and to output an answer based on the aggregated information to the user (S6).

This enables the information processing apparatus 300 to execute an appropriate analysis in response to the question, thereby suppressing hallucination in the result generated by the agent.

### Functional Configuration

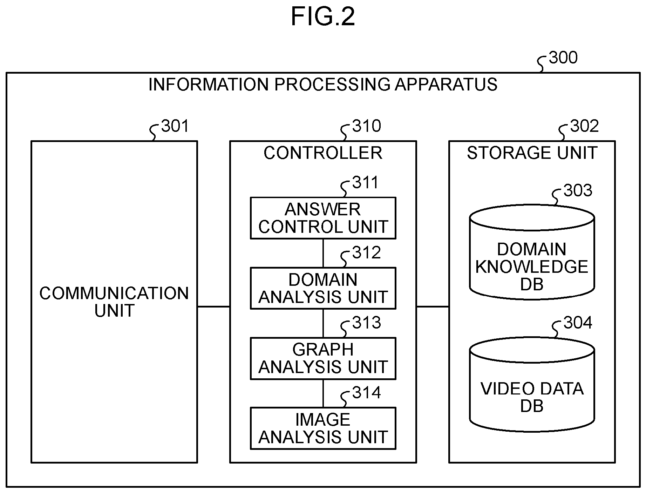

FIG. 2 is a functional block diagram illustrating the functional configuration of the information processing apparatus 300 according to the first embodiment. As illustrated in FIG. **2****,** the information processing apparatus 300 includes a communication unit 301, a storage unit 302, and a controller 310.

The communication unit 301 is a processing unit that controls communication with other devices, and is implemented, for example, by a communication interface. For example, the communication unit 301 receives video from a plurality of cameras installed in a warehouse. In addition, the communication unit 301 receives a question from a user terminal that performs analysis, and transmits an answer to the question to the user terminal.

The storage unit 302 is a processing unit that stores various data and various programs executed by the controller 310, and is implemented, for example, using a memory or a hard disk. For example, the storage unit 302 stores a domain knowledge database (DB) 303 and a video data DB 304. Moreover, the storage unit 302 also stores various trained machine training models to be used by the controller 310.

The domain knowledge DB 303 is a database that stores knowledge specific to a particular field. Specifically, the domain knowledge DB 303 stores information suitable for considering countermeasures and knowledge suitable for interpreting a result. In the present embodiment, for example, the domain knowledge DB 303 stores knowledge regarding warehouse work safety and training. As an example, the domain knowledge DB 303 stores knowledge regarding safety such as "In warehouses where machines and workers operate in the same place, it is advisable for each worker to wear a safety vest in a conspicuous color for safety", or knowledge regarding training such as "Since frequent training sessions lead to a decrease in motivation, it is preferable to limit training sessions to three times per year".

The video data DB 304 is a database that stores video to be analyzed. In the present embodiment, as an example, the video data DB 304 stores video captured by each of the cameras A, B, C, and D installed in different locations in the warehouse. Moreover, the video data DB 304 can store the video data on a per-frame basis. Additionally, the cameras can be installed at locations where past accidents have occurred or near-miss incidents have been reported.

The controller 310 is a processing unit that governs the information processing apparatus 300, and is implemented by, for example, a processor. The controller 310 executes an answer control unit 311, a domain analysis unit 312, a graph analysis unit 313, and an image analysis unit 314. The answer control unit 311, the domain analysis unit 312, the graph analysis unit 313, and the image analysis unit 314 are implemented by electronic circuits in the processor, by processes executed by the processor, or the like.

### Answer Control Unit 311: Parent Agent 330

The answer control unit 311 is a processing unit that executes the parent agent 330 and causes the parent agent 330 to execute various controls. Specifically, the answer control unit 311 acquires a question for the parent agent 330, which generates information in response to input information, where the question relates to an object in video footage that monitors a specific task. Then, the answer control unit 311, on the basis of the question, identifies a specific agent from among a plurality of child agents capable of cooperating with the parent agent 330, where the agent has a function related to either video recognition or domain knowledge for the specific task. Thereafter, the answer control unit 311 causes the parent agent 330 to output, as an answer to the question, an answer result based on the generation information that is generated by the specific child agent in accordance with the instructions from the parent agent 330.

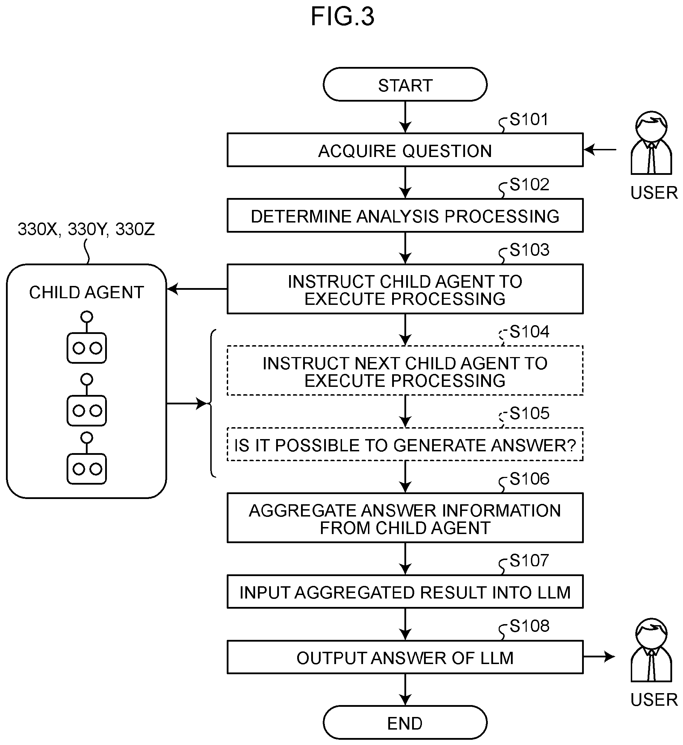

For example, the answer control unit 311 causes the parent agent 330 to execute the following processing. FIG. 3 is a flowchart illustrated to describe the processing performed by the parent agent 330. As illustrated in FIG. 3, the parent agent 330 acquires a question regarding warehouse work from a user (S101). Subsequently, the parent agent 330 determines the analysis processing to be performed to generate an answer to the question, in accordance with planning information in which instructions and aggregation conditions are predefined (S102).

Then, the parent agent 330 instructs the child agent to execute the determined analysis processing (S103). In this step, the parent agent 330 causes a subsequent child agent to perform additional analysis as appropriate (S104), or determines whether the answer result acquired from the child agent is information that is appropriate for generating an answer to the user, and if the answer result is unsatisfactory information, the parent agent 330 requests reprocessing (S105).

Thereafter, the parent agent 330 aggregates the answer results from the child agent (S106) and inputs the aggregated result to the LLM (S107). The output result of the LLM is output to the user as an answer (S108).

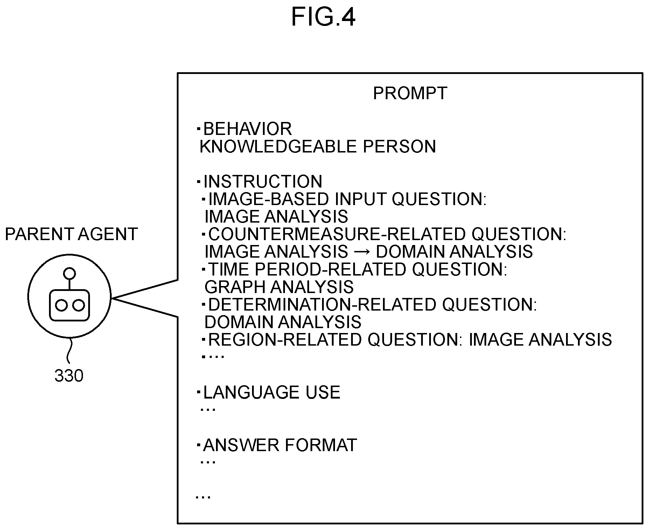

At this point, the planning information and the like configured in the parent agent 330 as described above can be set in the form of a prompt. FIG. 4 is a diagram illustrated to describe an example of a prompt given to the parent agent 330. As illustrated in FIG. 4, various pieces of information such as "behavior", "instruction", "language style", and "answer format" are set in the prompt.

The "behavior" is information that defines how the parent agent 330 behaves, and includes, for example, "knowledgeable person", "gentleman", and "expert". The "instruction" is information that defines the planning information of the parent agent 330 and specifies the correspondence between the content of the question and the analysis processing to be performed. For example, the "instruction" can include "If the input to the question includes an image, perform image analysis", "For questions related to countermeasures, perform image analysis followed by domain analysis", "For questions related to time periods, perform graph analysis", "For questions related to determination, perform domain analysis", and "For questions related to regions, perform image analysis". Moreover, the instruction can also be set to priorities that indicate which of multiple conditions is to be prioritized.

In this manner, in the case where a question that corresponds to a combination or sequence specified in the instruction is input, the parent agent 330 causes the child agent to execute the processing in accordance with the instruction and aggregates the results. On the other hand, even if a question that does not match the instruction is input, the parent agent 330 interprets information regarding the instruction as an example, autonomously determines an appropriate child agent and requests processing.

Further, the "language style" is information that defines how the parent agent 330 presents an answer and includes styles such as "expert". The "answer format" is information that defines the format in which the parent agent 330 provides an answer to the user, and includes formats such as "text format", "text format and image", "audio", and so on.

Moreover, depending on the framework used for the parent agent 330, the parent agent is able to determine whether the processing result from the child agent is satisfactory as an answer. For example, the parent agent 330 determines whether the generation information of the child agent is appropriate for use in generating an answer, and if it determines that the information is inappropriate, it requests the child agent to regenerate the generation information (answer result). For example, it is possible for the parent agent 330 to determine that the answer is unsatisfactory if the processing result from the child agent does not include any of the pre-specified information such as "who does what", "whether an image corresponding to the event was detected", or the like. Then, the parent agent 330 outputs the answer to the question if the result is determined to be appropriate.

### Domain Analysis: Child Agent 330X

The domain analysis unit 312 is a processing unit that executes the above-mentioned child agent 330X and causes the child agent 330X to execute various control operations. Specifically, if the content of the question satisfies the second condition (criteria for determination) of the instruction preconfigured in the parent agent 330, the domain analysis unit 312 searches for domain knowledge relevant to the specific task, generates the domain search result, and outputs it to the parent agent 330.

For example, the domain analysis unit 312 causes the child agent 330X to execute the following processing. Specifically, if a question related to a countermeasure is input from the parent agent 330, the child agent 330X refers to the domain knowledge DB 303 and returns an answer to the parent agent 330, such as the most appropriate countermeasure among multiple countermeasures or the predicted outcomes of each possible countermeasure.

For example, the child agent 330X is capable of inputting domain knowledge and a question from the parent agent 330 into a trained machine training model to determine an appropriate countermeasure. Additionally, the child agent 330X can identify the effects of executing each countermeasure using a digital twin or simulation technology and output the identified effects to the parent agent 330.

### Graph Analysis: Child Agent 330Y

The graph analysis unit 313 is a processing unit that executes the above-described child agent 330Y and causes the child agent 330Y to execute various control operations. Specifically, the graph analysis unit 313, if the content of the question satisfies a first condition (criteria related to the time period) defined in the instruction preconfigured in the parent agent 330, searches for graph data that represents a relationship between objects in the video and generates a search result for the graph data.

For example, the graph analysis unit 313 causes the child agent 330Y to execute the following processing. Specifically, the child agent 330Y acquires information regarding the structure of target graph data to be searched and a question text related to the object included in the video. The child agent 330Y generates a query for performing a search on the graph data on the basis of the information regarding the structure of the target graph data. The child agent 330Y searches for graph data in which attribute information of the object or interaction information between the objects is associated with the object included in the video, on the basis of the generated search query, and outputs information related to the object to the parent agent 330 by analyzing the result of the searched graph data.

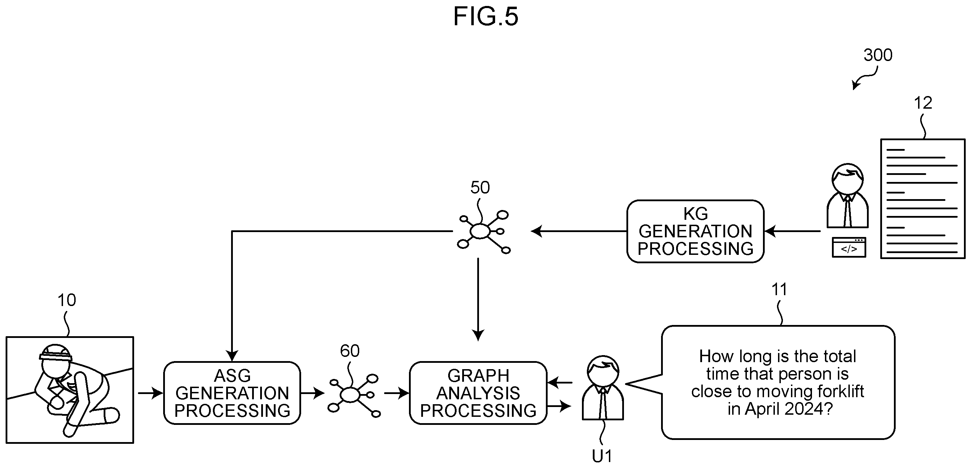

FIG. 5 is a diagram illustrated to describe graph analysis processing. As illustrated in FIG. 5, in the case where the child agent 330Y receives a question text 11 related to a video 10 from a user U1, the child agent 330Y outputs an answer to the question text 11. The video 10 is configured as a series of frames (still images) arranged in time sequence.

The child agent 330Y executes KG generation processing, ASG generation processing, and the graph analysis processing. For example, the KG generation processing and the ASG generation processing are executed in advance. In the graph analysis processing, processing for generating an answer is executed upon reception of the question text 11 from the user. The following describes the KG generation processing, the ASG generation processing, and the graph analysis processing in this order.

The KG generation processing executed by the child agent 330Y is described. The KG generation processing is a process for generating a knowledge graph 50 that indicates conditions for detecting a certain event in the video 10. For example, the knowledge graph 50 is a graph corresponding to a detection pattern and a matching pattern.

For example, the child agent 330Y acquires a text 12 related to the domain of the detection target, which is a detection target included in the video 10. The text 12 is, for example, "dangerous action posing a risk of accident". The child agent 330Y generates a detection target list from the text 12 using a large language model (LLM) or the like. The detection target list includes entries such as "approaching a moving forklift without wearing a safety vest", "holding cargo for an extended period", and "entering a roadway without checking both sides".

The child agent 330Y sets the detection target list as a prompt for generating detection and matching patterns, and inputs the prompt into the LLM to generate multiple candidate detection and matching patterns.

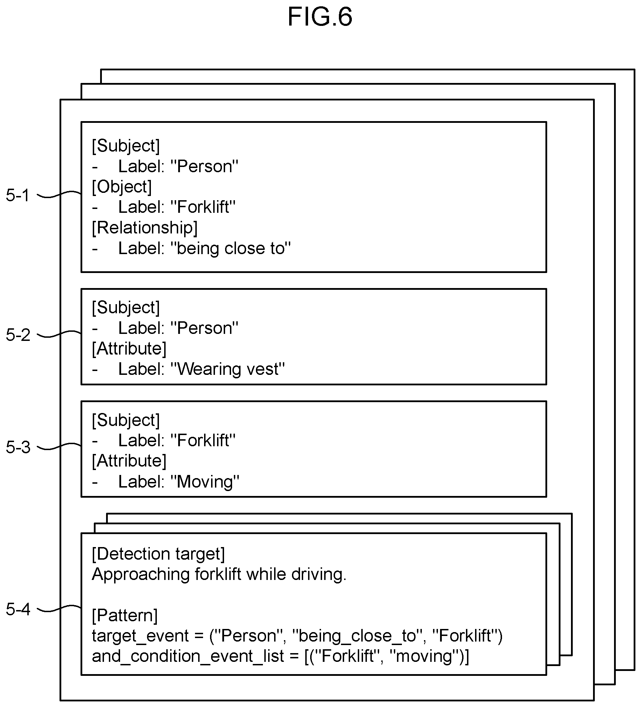

FIG. 6 is a diagram illustrating an example of the data structure of detection and matching patterns. In the example illustrated in FIG. 6, detection patterns 5-1, 5-2, and 5-3 and a matching pattern 5-4 are included. Each of the detection patterns 5-1 to 5-3 defines conditions of the detection target. In the detection pattern 5-1, "Subject", "Object", and "Relationship" are defined. For example, in the detection pattern 5-1, the relationship (Relationship) indicates that a person corresponding to "Subject" approaches a forklift corresponding to "Object". The "Relationship" is an example of interaction information.

In the detection patterns 5-2 and 5-3, "Subject" and "Attribute" are defined. For example, the detection pattern 5-2 indicates an attribute (Attribute) in which a person corresponding to "Subject" is wearing a safety vest. The "Attribute" is an example of attribute information.

In the matching pattern 5-4, the conditions of the matching target are further defined for each detection target that matches the conditions of the detection patterns 5-1, 5-2, and 5-3. For example, in the matching pattern 5-4, "Detection target" and "Pattern" are defined. The "Pattern" defines a pattern in which a person is approaching a forklift and the forklift is moving. In the "Pattern", whether or not the person is approaching the forklift is determined on the basis of the detection pattern 5-1. Whether or not the forklift is moving is determined on the basis of the detection pattern 5-3. Moreover, as defined in the detection pattern 5-2, the information that the target person is wearing a safety vest can also be set in the "Pattern".

In the case where the video 10 corresponds to the "Pattern" in the matching pattern 5-4, it is determined that the matching condition indicated in the "Detection target" is satisfied.

The child agent 330Y evaluates multiple candidate detection and matching patterns and selects the optimal detection pattern and matching pattern on the basis of the evaluation result. The child agent 330Y generates the knowledge graph 50 on the basis of the selected detection pattern and matching pattern.

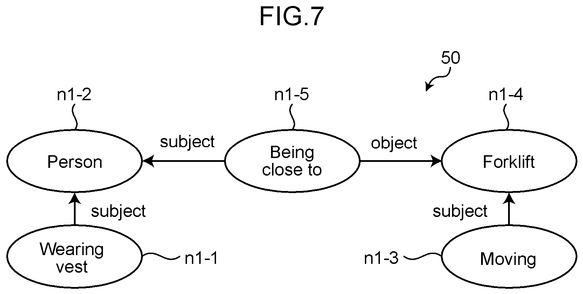

FIG. 7 is a diagram illustrating an example of the knowledge graph. For example, the knowledge graph 50 illustrated in FIG. 7 is generated on the basis of the detection patterns 5-1 to 5-3 and the matching pattern 5-4. The knowledge graph 50 includes nodes n1-1, n1-2, n1-3, n1-4, and n1-5. The node n1-1 is a node corresponding to "Subject is wearing a safety vest". The node n1-2 is a node corresponding to a person. An arrow is set from the node n1-1 to node n1-2, indicating that the Subject of the node n1-1 is defined as the person in the node n1-2.

The node n1-3 is a node corresponding to "Subject is moving". The node n1-4 is a node corresponding to a forklift. An arrow is set from the node n1-3 to the node n1-4, indicating that the Subject of the node n1-3 is defined in the node n1-4.

The node n1-5 is a node corresponding to "Subject is approaching the object". An arrow is set from the node n1-5 to the node n1-2, indicating that the Subject of the node n1-5 is defined in the node n1-2. An arrow is set from node n1-5 to node n1-4, indicating that the Object of node n1-5 is defined in the node n1-4. Moreover, the knowledge graph 50 can be generated only from the detection patterns. In addition, in that case, the knowledge graph 50 can be represented using the data structure of the detection patterns 5-1 to 5-3. Furthermore, in the case where the knowledge graph 50 is generated from the detection pattern and the matching pattern, the knowledge graph 50 can be represented using the data structure of the detection patterns 5-1 to 5-4.

The KG generation process executed by the child agent 330Y has been described above.

The ASG generation processing executed by the child agent 330Y is now described. The ASG generation processing is a process of generating an action scene graph (ASG) 60 from the video 10 using the detection pattern of the knowledge graph 50. The ASG is also referred to as a video scene graph or a spatio-temporal scene graph.

For example, the child agent 330Y performs object detection using the detection pattern on the time-series frames of the video 10 and performs tracking of the detected object. The child agent 330Y generates a video clip by grouping the detection results and tracking results for every predetermined number of frames. The child agent 330Y inputs the video clip and prompts generated for detecting relationships and attributes generated from the detection pattern into a visual detection model such as a vision-language model (VLM), thereby identifying attribute information of the detection target contained in the video clip, interaction information between the detection targets, and the time at which the attribute information or interaction information occurred.

The child agent 330Y generates an action scene graph 60 on the basis of a video clip, attribute information of the detection target identified from the video clip, interaction information between the detection targets, and temporal information. The action scene graph 60 represents, in units of events (attribute information <Attribute> or interaction information <Relationship>), the relationship between a subject, an object, and a relationship, or the relationship between a subject, an object, and an attribute.

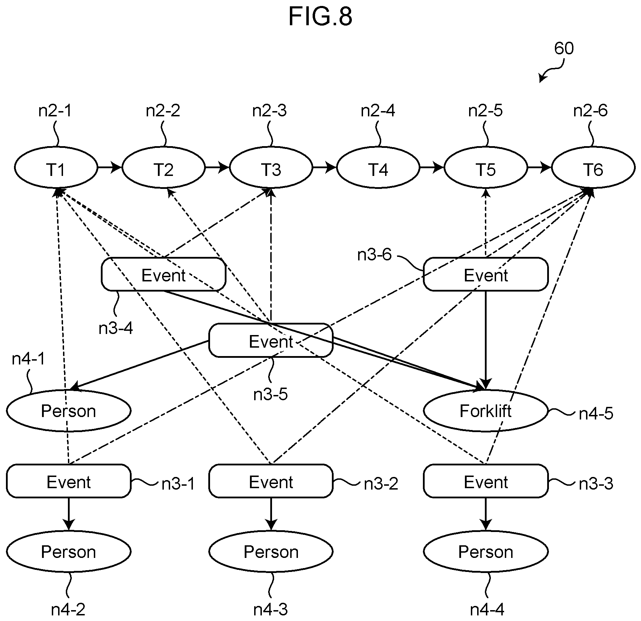

FIG. 8 is a diagram illustrating an example of an action scene graph. As illustrated in FIG. 8, the action scene graph 60 has time nodes n2-1, n2-2, n2-3, n2-4, n2-5, and n2-6. The action scene graph 60 has event nodes n3-1, n3-2, n3-3, n3-4, n3-5, and n3-6. The action scene graph 60 has concrete object nodes n4-1, n4-2, n4-3, n4-4, n4-5, and n4-6.

The time nodes n2-1 to n2-6 are nodes that indicate time, and correspond to times T1, T2, T3, T4, T5, and T6, respectively. For example, the times T1, T2, T3, T4, T5, and T6 correspond to the timestamps (e.g., frame numbers) of each frame included in the video clip.

The event nodes n3-1 to n3-6 are nodes corresponding to attribute information or interaction information. For example, the event nodes n3-1 to n3-3 correspond to "wearing a safety vest". The event nodes n3-4 and n3-6 correspond to "moving". The event node n3-5 corresponds to "approaching".

The concrete object nodes n4-1 to n4-6 are nodes corresponding to detection targets. For example, the concrete object nodes n4-1 to n4-4 correspond to persons P1, P2, P3, and P4, respectively. The concrete object node n4-5 corresponds to a forklift.

The use of the action scene graph 60 makes it possible to grasp various types of information related to the video 10. For example, the event node n3-1 connected to the time nodes n2-1 and n2-6 is also connected to the concrete object node n4-2. This indicates that the person P2 wearing a safety vest is present in the video 10 during the period from the time T1 to the time T6.

The event node n3-2 connected to the time nodes n2-1 and n2-6 is also connected to the concrete object node n4-**3.** This indicates that the person P3 wearing a safety vest is present in the video 10 during the period from the time T1 to the time T6.

The event node n3-3 connected to the time nodes n2-1 and n2-6 is connected to the concrete object node n4-4. This indicates that the person P4 wearing a safety vest is present in the video 10 during the period from the time T1 to the time T6.

The event node n3-4 connected to the time nodes n2-1 and n2-3 is also connected to the concrete object node n4-5. This indicates that a moving forklift is present in the video 10 during the period from the time T1 to the time T3.

The event node n3-5 connected to the time nodes n2-2 and n2-3 is also connected to the concrete object nodes n4-1 and n4-5. This indicates that an event in which the person P1 approaches the moving forklift occurs in the video 10 during the period from the time T2 to the time T3.

The event node n3-6 connected to the time nodes n2-5 and n2-6 is also connected to the concrete object node n4-5. This indicates that the moving forklift is present in the video 10 during the period from the time T5 to the time T6.

The above describes the ASG generation processing performed by the child agent 330Y.

Next, the graph analysis processing performed by the child agent 330Y is described. The graph analysis processing is a process in which, upon receiving the question text 11 related to the video 10 from the user U1, the action scene graph 60 is analyzed to generate an answer using the LLM. For example, in the case where the question text 11 related to the video 10 is received from the user U1, the generative AI (e.g., LLM) generates an answer to the question text 11 on the basis of the generated action scene graph 60. More specifically, the information processing apparatus 300, upon receiving a question text regarding a first object in the video from a user, identifies a result indicating interaction information associated with the first object on the basis of the generated graph data, and the generative AI generates an answer to the question text on the basis of the result indicating the identified interaction information. For example, the information processing apparatus 300, upon receiving the question text regarding the first object in the video, searches for the action scene graph 60 to identify a result indicating interaction information associated with the first object. Then, the information processing apparatus 300 generates an answer to the question text by inputting a prompt constituted by the question and the interaction information into the LLM.

Further, for example, the child agent 330Y generates a search query on the basis of the question text 11 and the knowledge graph 50 and performs data retrieval on the action scene graph 60 by using the generated search query. The child agent 330Y generates an answer using the result of the data retrieval.

### Image Analysis: Child Agent 330Z

The image analysis unit 314 is a processing unit that invokes the above-mentioned child agent 330Z and causes the child agent 330Z to execute various control operations. Specifically, in the case where the content of a question satisfies a third condition (content specifying a region) of the instruction previously set in the parent agent 330, the image analysis unit 314 performs processing of recognizing a region in the video and generates an execution result of the processing of recognizing the region.

For example, the image analysis unit 314 causes the child agent 330Z to execute the following processing. Specifically, the child agent 330Z acquires a monitoring target video. The child agent 330Z identifies, within a predetermined video frame among multiple video frames constituting the acquired video, a first region where a first object is located, and identifies a question regarding the first object that is present in the first region. The child agent 330Z analyzes the acquired video to identify a second object associated with the first object that is present in the first region among multiple objects present in each of the multiple video frames. The child agent 330Z generates an answer to the question on the basis of the question related to the first object and visual features of the first and second objects, and outputs the generated answer to the parent agent 330.

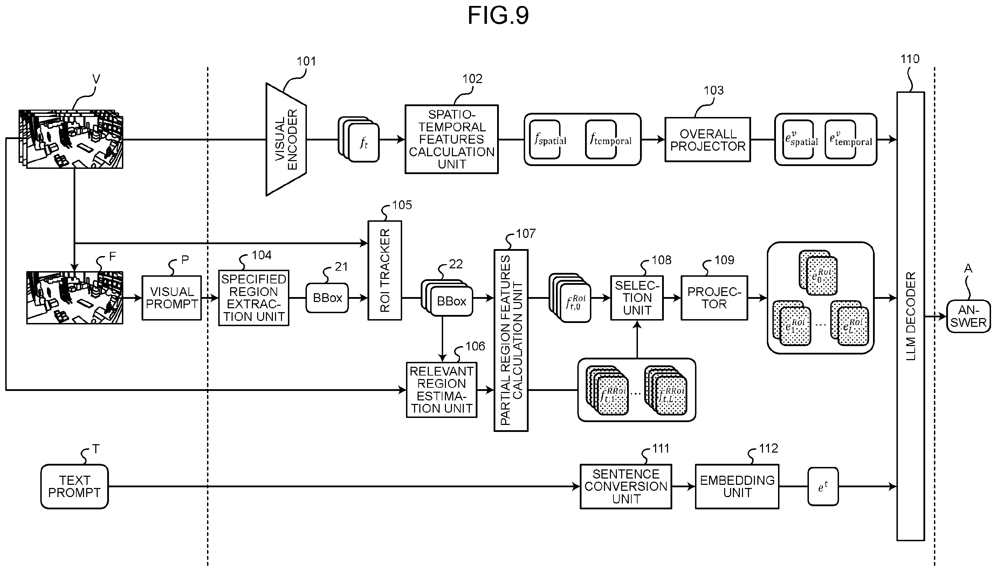

FIG. 9 is a diagram illustrated to describe the image analysis processing. With reference to FIG. 9, an overview of the question-answering processing is described. FIG. 9 also illustrates the data used in each processing operation. Each data item is described using the labels illustrated in FIG. 9.

A video output apparatus outputs a video V. The video V includes numerous consecutive frames. A user selects a selection frame F from the video V using a user terminal apparatus, and sets a visual prompt P for the selection frame F.

A visual encoder 101 calculates a visual feature fₜ for each frame from the video V.

A spatio-temporal features calculation unit 102 calculates a spatial feature value fₛₚₐₜᵢₐₗ and a temporal feature value fₜₑₘₚₒᵣₐₗ of the video V from the visual feature fₜ of each frame calculated by the visual encoder 101.

An overall projector 103 executes embedding processing on the spatial feature value fₛₚₐₜᵢₐₗ to match the feature space of a LLM decoder 110, and generates embedded data e^{ν}ₛₚₐₜᵢₐₗ of the spatial feature value. Similarly, the overall projector 103 executes the embedding processing on the temporal feature value fₜₑₘₚₒᵣₐₗ to match the space of the feature value of the LLM decoder 110, and generates embedded data e^{ν}ₜₑₘₚₒᵣₐₗ of the temporal feature value.

A specified region extraction unit 104 generates a BBox 21 indicating the ROI, which is the partial region specified by the visual prompt P, on the basis of the visual prompt P for the selection frame F.

An ROI tracker 105 searches each frame of the video V using the BBox 21, and generates BBox 22 indicating the ROI corresponding partial region of each frame.

A relevant region estimation unit 106 estimates a relevant region in each target frame, which are the basis for extracting the ROI corresponding partial region indicated by the BBox 22, from the video V. In this context, the relevant region estimation unit 106 estimates L relevant regions in descending order of relevance.

A partial region features calculation unit 107 calculates a feature value f^{Roi}_{t,0} of the ROI-corresponding partial region in each target frame from the BBox 22, which indicates the ROI-corresponding partial region of each target frame.

Further, the partial region features calculation unit 107 calculates feature values f^{RRoi}_{t,1} to f^{RRoi}_{t,L} of each of the relevant regions in each target frame from the information indicating the relevant regions in each target frame. Here, since there are L relevant regions, the partial region features calculation unit 107 calculates the feature values f^{RRoi}_{t,1} to f^{RRoi}_{t,L} for each of the L relevant regions.

A selection unit 108 selects a feature value to be used for a question from among the ROI-corresponding partial region feature value f^{Roi}_{t,0} and the relevant region feature values f^{RRoi}_{t,1} to f^{RRoi}_{t,L} of each of the relevant regions.

A projector 109 performs the embedding processing on the feature values selected by the selection unit 108 to generate embedded data e^{RoI}₀ related to the ROI-corresponding partial region and embedded data e^{RoI}₁ to e^{RoI}_{L} related to the relevant regions.

A sentence conversion unit 111 performs sentence conversion processing on a text prompt T in accordance with the format of the question to the LLM decoder 110.

An embedding unit 112 performs the embedding processing on the text prompt T subjected to the sentence conversion to generate embedded data e^{t}.

The LLM decoder 110 receives as input the embedded data e^{ν}ₛₚₐₜᵢₐₗ of the spatial feature value, embedded data e^{ν}ₜₑₘₚₒᵣₐₗ of the temporal feature value, embedded data e^{RoI}₀ relating to the ROI-corresponding partial region, embedded data E^{RoI}₁ to e^{RoI}_{L} relating to the relevant region, and embedded data e^{t} indicating the question. Then, the LLM decoder 110 generates an answer A to a question regarding the target specified by the video and the visual prompt on the basis of the input data.

### Specific Example

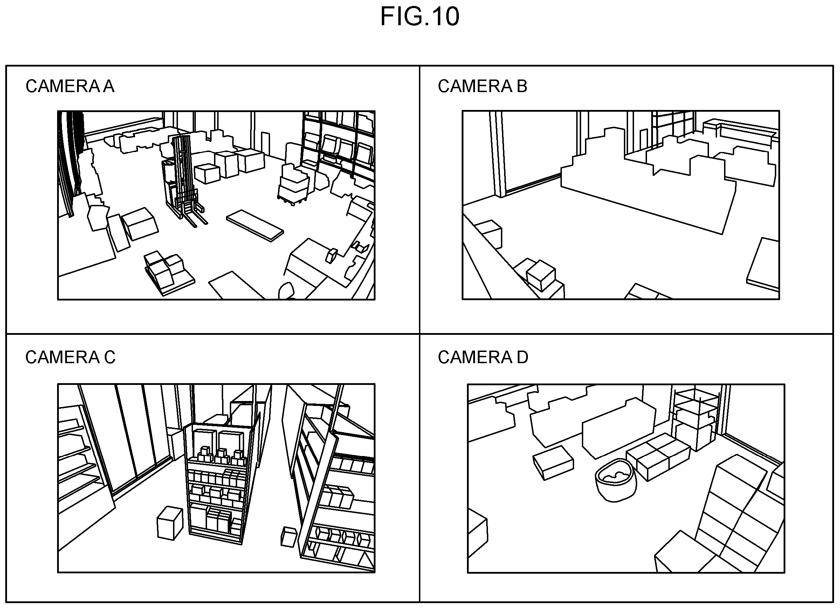

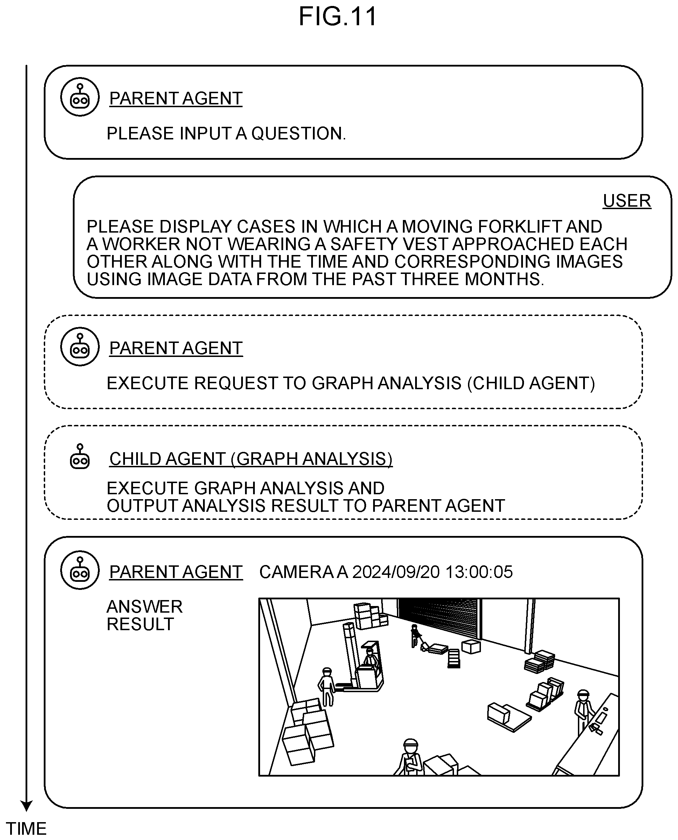

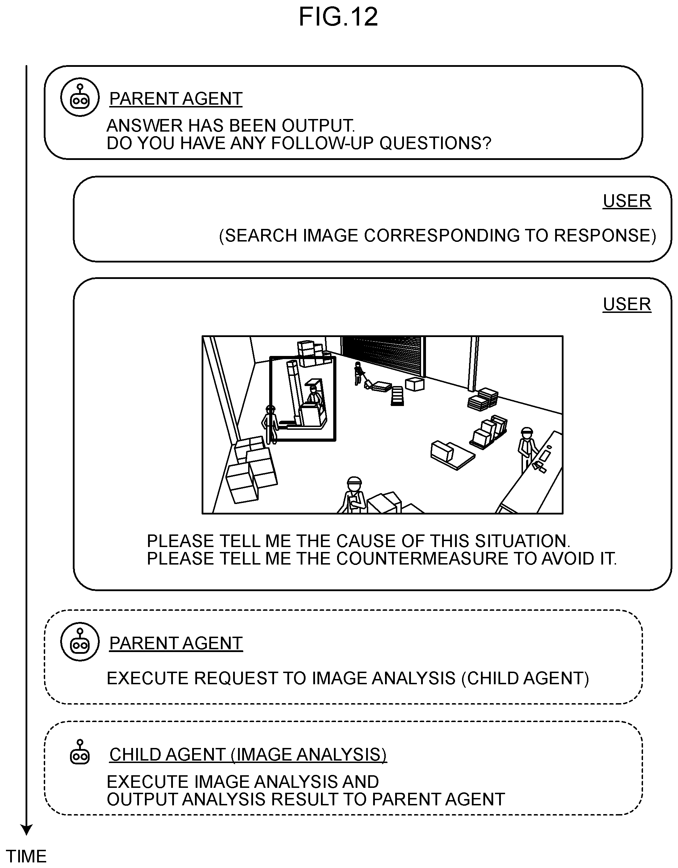

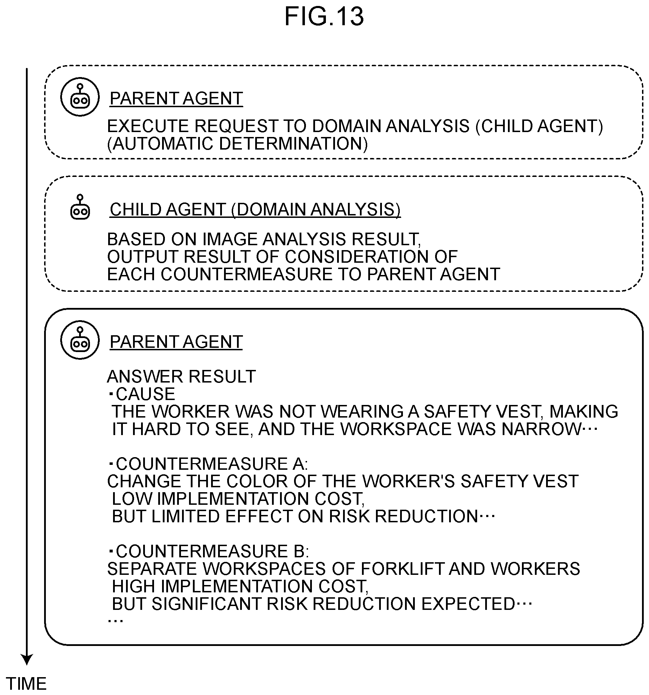

An example of the specific processing procedure from a user inputting a question to obtaining an answer is now described with reference to FIGS. 10 to 13. FIG. 10 is a diagram illustrated to describe a situation of the specific example, FIG. 11 is a diagram illustrated to describe an exemplary screen of the specific example (first step), FIG. 12 is a diagram illustrated to describe an exemplary screen of the specific example (second step), and FIG. 13 is a diagram illustrated to describe an exemplary screen of the specific example (third step).

Initially, the specific example is described in terms of a situation. As illustrated in FIG. 10, cameras A, B, C, and D are installed at different locations in a warehouse. Then, each camera captures images of workers, forklifts, and other operations within its imaging range, and outputs video as data to the information processing apparatus 300. For example, the camera A captures an image of the work area of the forklift, the camera B captures an image of the vicinity of the entrance/exit, the camera C captures an image of the shelves on which cardboard boxes are stacked, and the camera D captures an image of the workbench where the worker works. Moreover, it is assumed that the ASG and KG are generated in advance.

Subsequently, in this example, the user persona is a manager responsible for safety and health management at a warehouse. The manager is concerned about the occurrence of a serious risk such as "a worker not wearing a safety vest approaching a forklift", and is considering implementing education-based countermeasures to prevent such accidents.

In this context, as illustrated in FIG. 11, the parent agent 330 outputs a screen to the user displaying "Please enter your question", and accepts a question input from the user, such as "From image data from the past three months, please display cases where a moving forklift and a worker not wearing a safety vest approached each other, along with their time and corresponding image".

Upon receiving the question, the parent agent 330 refers to the instructions in the prompt and requests the child agent 330Y to perform the graph analysis in accordance with "For the question involving time periods, perform graph analysis". Then, the child agent 330Y performs the graph analysis and outputs the analysis result to the parent agent 330 as an answer result (generation information).

Subsequently, the parent agent 330 outputs to the user the analysis result from the child agent 330Y, including the images that match the case of the user's question, information regarding the camera that captured the image, the capture timestamp, and the like. For example, the parent agent 330 outputs multiple images including an image captured by the camera A at "2024/09/20 13:00:05".

Subsequently, as illustrated in FIG. 12, the parent agent 330 outputs a screen that displays "The answer has been output. Do you have any follow-up questions?" and accepts additional query input from the user. For example, the user searches for images captured by the camera A around "2024/09/20 13:00:05" obtained as an answer, and, among the matched cases, the user takes notice of an event captured by the camera A and, based on this case, considers requesting "Please analyze the cause of such an incident based on the situational context at the site and propose suggestions for improvement".

Then, the parent agent 330 accepts from the user the question, "Please tell me what caused this situation. Please tell me a countermeasure to avoid it", after the user selects, through an operation, a situation in which a worker and a forklift are approaching each other on the image from the camera A by designating a bounding box (frame) on the image.

Then, the parent agent 330 refers to the instructions in the prompt, and initially requests the child agent 330Z to perform the image analysis in accordance with "If an image is included in the input question, perform image analysis" and "For a question related to countermeasures, perform domain analysis after performing image analysis". Then, the child agent 330Z performs the image analysis and outputs the analysis result to the parent agent 330 as the answer result.

Subsequently, as illustrated in FIG. 13, the parent agent 330 outputs the analysis result from the child agent 330Z to the child agent 330X and requests the child agent 330X to perform the domain analysis. Then, the child agent 330X performs the domain analysis on the basis of the image analysis result and outputs the result of consideration of each countermeasure to the parent agent 330.

As a result of the processing mentioned above, the parent agent 330 inputs the answer result from each of the child agents into an LLM or the like, and outputs the aggregated result as a final answer to the user. For example, the parent agent 330 outputs, as an answer result, the "Cause: The worker was not wearing a safety vest..." in response to the event received in the question, and, for the follow-up question, the content, advantages, and demerits of the countermeasures to be implemented, "Countermeasure A" and "Countermeasure B". For example, "Countermeasure A" is a countermeasure to change the color of the worker's safety vest, which has low implementation cost but only limited effectiveness in risk reduction, and "Countermeasure B" is a countermeasure to separate the workspace of the forklift and the worker, which involves high implementation cost but is expected to significantly reduce the risk.

### Effects

As described above, the information processing apparatus 300 is capable of executing appropriate analysis corresponding to the question, thereby suppressing hallucinations in the results generated by the agent.

Further, the information processing apparatus 300 detects the object to be detected from each frame of the image by analyzing the video of the analysis target using a detection pattern. The information processing apparatus 300 generates a result indicating the attribute information and interaction information of the object to be detected by inputting the detection prompt generated from the detection pattern and the visual prompt generated from the detection result into the VLM or the like. The information processing apparatus 300 generates an action scene graph from the generated result. This enables the generation of an action scene graph that includes the Subject, Object, and Relationship expected by the user. Thus, the information processing apparatus 300 is capable of generating an accurate answer to the question text.

Further, the information processing apparatus 300 tracks the specified region of interest (ROI) across all frames to extract the ROI-corresponding region, and extracts the relevant region that is related to and has high relevance with the ROI-corresponding region in each frame. Then, the information processing apparatus 300 generates an answer using the feature value of the relevant region in addition to the spatial and temporal feature value of the entire video and the feature value of the ROI-corresponding region. Thus, the information processing apparatus 300 makes it possible to automatically incorporate peripheral information related to the specified target and provide it to a large multi-modal model (LMM) or the like. As a result, the information processing apparatus 300 is capable of considering not only the spatio-temporal changes in importance across the entire video and within the focus target, but also significant changes in related entities such as persons or objects that have high relevance to the focus target. Thus, it is possible for the information processing apparatus 300 to improve the capability to understand images and videos.

### (b) Second Embodiment

Incidentally, the processing executed by the child agents described above is merely an example, and other types of processing can also be executed. Thus, in a second embodiment, as another example of the processing executed by the child agent, technology for "Visual question answering (VQA) that appropriately recognizes and selects the context by implementing compression of video information using the context as a criterion for compression" is described.

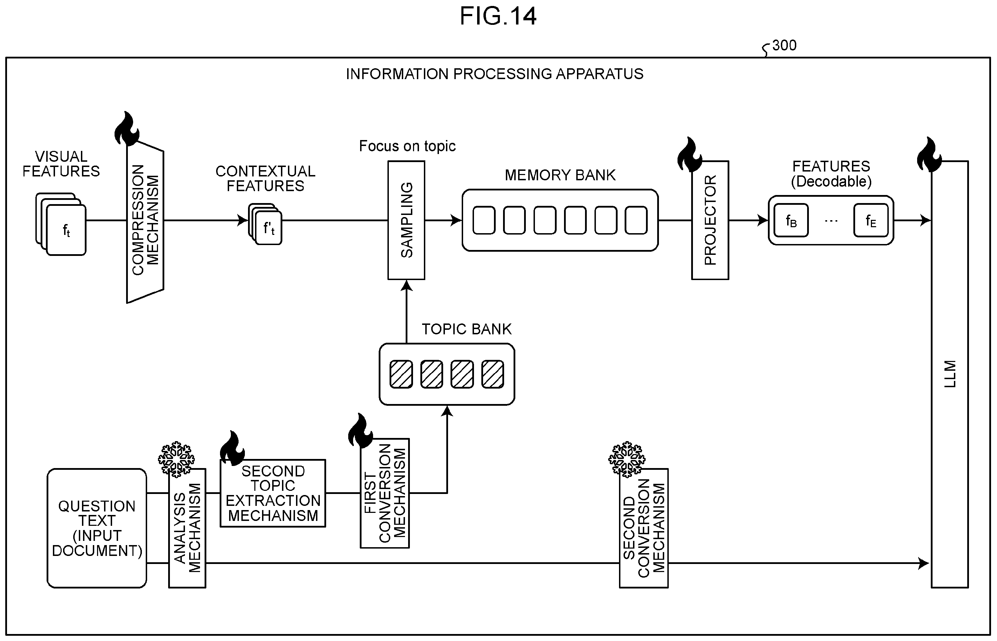

FIG. 14 is a diagram illustrated to describe another example of processing executed by the child agent. For example, the child agent inputs each video frame (video frame) of a video into an encoder to extract a visual feature from each video frame and retains each extracted visual feature. Subsequently, the child agent inputs each visual feature into a compression mechanism such as an autoencoder to extract a contextual feature from each visual feature.

Then, the child agent inputs each contextual feature into a first topic extraction mechanism, which is a mechanism that predicts, extracts, and prioritizes objects and topics that can be the subject of questions, such as site-specific characteristics or appearing persons, to generate a topic of interest (hereinafter sometimes simply referred to as topic) and store it in a topic bank. Thereafter, the child agent performs sampling to extract features corresponding to the topic from the contextual feature, and stores the sampled contextual feature in a memory bank.

In other words, at the initial video input stage, since no question has been input yet, the child agent extracts a candidate topic that is considered important based solely on the video, and generates the initial state of the topic bank using Topic extraction, which is an example of a first topic extraction mechanism. In addition, the child agent retains information that has high relevance to the feature of the topic bank in the memory bank, such as if the number of frames exceeds the memory bank capacity.

Thereafter, if a question text is input, as illustrated in FIG. 14, the child agent inputs the question text into the analysis mechanism and decomposes it into morphemes. Subsequently, the child agent inputs the obtained morphemes into a second topic extraction mechanism that extracts the object or topic that is current subject of the question from the question text and updates the topic bank, after which it extracts a topic. Then, the child agent inputs the extracted topic into a first conversion mechanism, which is an example of a projector that performs format conversion (projection) to a topic to be stored in the topic bank, and updates the topic bank with the format-converted topic.

Then, the child agent performs sampling to extract features corresponding to the updated topics in the topic bank and stores the sampled contextual features in the memory bank. In other words, the child agent is capable of updating (regenerating) the memory bank using the stored (stocked) image features. In addition, the child agent is capable of establishing criteria for updating the memory bank, for example, when a question about a topic that has never been asked before is input. Furthermore, the child agent extracts contextual features that have high relevance to the top K topics (where K is an arbitrary number) in the topic bank.

Then, the child agent repeats the processing of FIG. 14 each time a new question is input. If no further question is input, the child agent inputs the morphemes obtained from the question text into a second conversion mechanism (embedding mechanism) that converts the input into a format suitable for the LLM, thereby converting the morphemes into a numerical vector. Similarly, the child agent inputs the contextual features stored in the memory bank into a projector to convert (recover) them into features understandable by the LLM (visual embeddings). Then, the child agent inputs both the numerical vector of the question text and the features (visual embeddings) into the LLM to obtain and output the answer.

In this way, the child agent performs context-based feature compression and extracts a candidate of an important topic from the video information. The child agent then updates the topic of interest on the basis of the content of each question input thereafter, performs information compression or information extraction from the stocked video features on the basis of the topic of interest, and updates the memory so that the updated memory contains a large amount of information relevant to the topic of interest. Then, the child agent recovers the compressed features into a form understandable by the LLM and inputs the recovered features into the LLM.

Accordingly, the child agent is capable of implementing video information storage and feature compression that retains important information by focusing on the context of the video and the content of the question, even for long-duration videos, thereby improving the accuracy of the output results in the VQA.

### (c) Third Embodiment

While the above describes the embodiments of the present disclosure, embodiments of the present disclosure can be implemented in various different forms other than the above-mentioned embodiments.

### Numerical Value and Other Factors

The machine training models, contexts, topics, features, video, number of child agents, instructions, prompts, and the like used in the embodiment disclosed above are merely examples and can be modified as desired. In addition, the procedure of the processing described in each flowchart can also be modified as appropriate as long as there is no inconsistency.

### Automatic Generation of Planning Information

Further, the parent agent 330 is capable of automatically generating planning information. For example, the parent agent 330 is capable of, by using preset instructions (example information), generating planning information that defines the execution order of child agents generating information in response to a question and the conditions for aggregating the generation information. For example, the parent agent 330 is capable of performing automatic generation by using the functionality of an AI agent, or is capable of performing automatic generation by using a machine training model trained to automatically generate instructions in response to input of example information and a question.

### System

The processing procedures, control procedures, specific names, and information including various types of data and parameters presented herein and drawings can be modified as desired unless otherwise specified.

Further, the specific implementation of distributing and integrating the components of each device or apparatus is not limited to the illustrated examples. For example, each child agent can be executed on a device separate from the parent agent. In other words, the entirety or a part of the components can be functionally or physically distributed or integrated into any units depending on various factors such as load and usage status. Furthermore, each processing function of each device or component can be implemented in whole or in part by a CPU and a program analyzed and executed by the CPU, or alternatively, by hardware using wired logic.

Furthermore, each processing function performed by each device or component can be implemented in whole or in part by a CPU and a program analyzed and executed by the CPU, or alternatively, by hardware using wired logic.

### Hardware

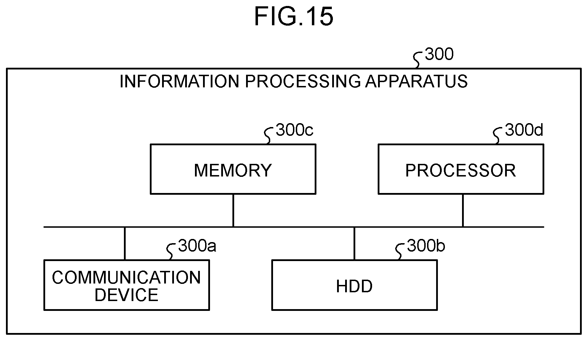

FIG. 15 is a diagram illustrated to describe an exemplary hardware configuration. As illustrated in FIG. 15, the information processing apparatus 300 includes a communication device 300a, a hard disk drive (HDD) 300b, a memory 300c, and a processor 300d. Additionally, the respective components illustrated in FIG. 15 are connected to each other via a bus or similar connection.

The communication device 300a is a network interface card or the like, and allows communication with other devices. The HDD 300b stores programs and DBs for operating the functions illustrated in FIG. 2.

The processor 300d reads a program for executing processing similar to that of each processing unit illustrated in FIG. 2 from the HDD 300b or the like and loads the read program into the memory 300c, thereby operating a process for executing each function described in FIG. 2 and the like. For example, this process executes a function similar to that of each processing unit included in the information processing apparatus 300. Specifically, the processor 300d reads out a program that implements functions similar to those of the answer control unit 311, the domain analysis unit 312, the graph analysis unit 313, the image analysis unit 314, and the like from the HDD 300b or the like. Then, the processor 300d executes a process that executes processing similar to that of the answer control unit 311, the domain analysis unit 312, the graph analysis unit 313, the image analysis unit 314, and the like.

In this way, the information processing apparatus 300 operates as an information processing apparatus that executes an information processing method by reading out and executing the program. In addition, the information processing apparatus 300 is capable of implementing functions similar to those of the above-mentioned embodiments by reading out the above-mentioned program from a recording medium using a medium reading apparatus and executing the read program. Moreover, the program in other embodiments is not limited to being executed by the information processing apparatus 300. For example, the above-described embodiment can be similarly applied to a case where another computer or server executes the program or a case where these cooperate to execute the program.

Such a program can be distributed over a network such as the Internet. In addition, the program can be recorded on a computer-readable recording medium such as a hard disk, a flexible disk (FD), a CD-ROM, a magneto-optical disk (MO), or a digital versatile disc (DVD), and can be executed by being read from the recording medium by a computer.

According to one embodiment, it is possible to suppress hallucination in results generated by an agent.

## Claims

1. An answer generation program that causes a computer (300) to execute a process comprising:
acquiring (S101) a question input to a first agent that generates information based on input information, the question being related to a video for monitoring a specific task;
identifying (S102) a specific agent that has a function of either video recognition for the specific task or domain knowledge of the specific task, from among a plurality of second agents capable of cooperating with the first agent, based on the acquired question; and
causing (S108) the first agent to output, as an answer to the question, an answer result based on generation information that is generated by the identified specific agent in accordance with an instruction from the first agent.

2. The answer generation program according to claim 1, wherein
the causing (S108) includes:
aggregating (S106) the generation information that is generated by the plurality of identified specific agents based on planning information defining an aggregation condition for the generation information of the plurality of identified specific agents; and
causing (S108) the first agent to output, as the answer to the question, an answer result based on the aggregated generation information.

3. The answer generation program according to claim 1 or **2,** wherein the process further includes:
acquiring (S101) a video including an object and a person performing the specific task using the object;
acquiring (S101) a question regarding a countermeasure for an event that occurred during work by the person present in the video;
analyzing (S102, S103) the video to identify a type of action performed by the person on the object that caused the event;
identifying (S102, S103) task-related knowledge information based on the domain knowledge of the specific task; and
generating (S108) an answer to the question by inputting a prompt including the identified action type and the task-related knowledge information into a large language model.

4. The answer generation program according to claim 1 or 2, wherein the process further includes:
causing (S105) the first agent to determine whether the generation information from the identified specific agent is appropriate as information to be used for the answer result; and
in a case where it is determined that the information is inappropriate, causing (S105) the first agent to request the specific agent to regenerate the generation information,
wherein the causing (S105) includes,
in a case where it is determined the information is appropriate, causing the first agent to output, as the answer to the question, an answer result based on the generation information from the specific agent.

5. The answer generation program according to claim 1 or 2, wherein
the causing (S105) includes:
causing the first agent to generate planning information using instructions preset for the first agent, the planning information defining an execution order of a second agent and an aggregation condition for the generation information, the second agent being configured to generate the generation information in response to the question; and
generating the answer result in accordance with the planning information.

6. The answer generation program according to claim 1 or 2, wherein
the plurality of second agents include
an agent responsible for performing a search on domain knowledge related to the specific task, an agent responsible for performing a search on graph data representing object relationships in the video, and an agent responsible for performing region recognition in the video, and
the identifying (S102) includes
determining an execution order of the respective agents based on content of the question.

7. The answer generation program according to claim 1, wherein the process further includes:
acquiring (S101) a question regarding an event related to an object present in a monitoring target video;
in a case where content of the question regarding the object satisfies a first condition defined in instructions preset for the first agent, causing (S103-S107) the second agent, to which the question is input, to search for graph data representing object relationships in the video and to generate a search result of the graph data;
in a case where the content of the question satisfies a second condition defined in the instructions preset for the first agent, causing (S103-S107) the second agent, to which the question is input, to search for domain knowledge related to the specific task and to generate a domain search result; and
generating (S103-S107) an answer to the question by inputting a prompt including the search result of the graph data and the search result of the domain knowledge into a large language model.

8. The answer generation program according to claim 1, wherein the process further includes:
acquiring (S101) a question regarding an event related to an object present in a monitoring target video;
in a case where content of the question regarding the object satisfies a first condition defined in instructions preset for the first agent, causing (S103-S107) the second agent, to which the question is input, to search for graph data representing object relationships in the video and to generate a search result of the graph data;
in a case where the content of the question satisfies a second condition defined in the instructions preset for the first agent, causing (S103-S107) the second agent, to which the question is input, to search for domain knowledge related to the specific task and to generate a search result of the domain;
in a case where the content of the question satisfies a third condition defined in the instructions preset for the first agent, causing (S103-S107) the second agent, to which the question is input, to perform region recognition processing within the video and generate an execution result of the region recognition processing; and
generating (S103-S107) an answer to the question by inputting a prompt including the search result of the graph data, the search result of the domain knowledge, and the execution result of the region recognition processing into a large language model.

9. The answer generation program according to claim 1, wherein the process further includes:
acquiring (S101) information regarding a structure of graph data to be searched and acquiring a question text regarding an object included in the video;
causing (S103-S107) the specific agent to execute processing to generate a query to search for the graph data based on the information regarding the structure of the graph data to be searched;
causing (S103-S107) the specific agent to execute processing to search for the graph data in which attribute information of objects or interaction information between objects is associated with objects included in the video based on the generated search query; and
causing (S103-S107) the first agent to execute processing to output information regarding the object by analyzing a result of the searched graph data.

10. The answer generation program according to claim 1, wherein the process further includes:
acquiring (S101) a monitoring target video;
identifying (S102) a first region in which a first object is located in a predetermined frame of the video among a plurality of video frames constituting the acquired video and identifying a question regarding the first object present in the first region;
causing (S108) the specified agent to execute processing to identify a second object related to the first object present in the first region among a plurality of objects that are present in respective video frames, by analyzing the acquired video; and
causing (S108) the first agent to generate an answer to the question based on the question regarding the first object and visual features of the first object and the second object.

11. An answer generation method carried out by a computer (300),:
acquiring (S101) a question input to a first agent that generates information based on input information, the question being related to a video for monitoring a specific task;
identifying (S102) a specific agent that has a function of either video recognition for the specific task or domain knowledge of the specific task, from among a plurality of second agents capable of cooperating with the first agent, based on the acquired question; and
causing (S108) the first agent to output, as an answer to the question, an answer result based on generation information that is generated by the identified specific agent in accordance with an instruction from the first agent.

12. An information processing apparatus (300) comprising a controller (310) configured to:
acquire a question input to a first agent that generates information based on input information, the question being related to a video for monitoring a specific task;
identify a specific agent that has a function of either video recognition for the specific task or domain knowledge of the specific task, from among a plurality of second agents capable of cooperating with the first agent, based on the acquired question; and
cause the first agent to output, as an answer to the question, an answer result based on generation information that is generated by the identified specific agent in accordance with an instruction from the first agent.
